(19) Europäisches Patentamt / European Patent Office / Office européen des brevets

(11) **EP 2 778 623 B1**

(12) **EUROPEAN PATENT SPECIFICATION**

(45) Date of publication and mention
of the grant of the patent:
**27.02.2019 Bulletin 2019/09**

(51) Int Cl.:
***G01D 5/244*** *(2006.01)*  ***B25J 13/08*** *(2006.01)*
***G01D 5/347*** *(2006.01)*

(21) Application number: **14159732.8**

(22) Date of filing: **14.03.2014**

(54) **Position detection apparatus, lens apparatus, image pickup system, and machine tool apparatus**

Positionsmess-, Linsenvorrichtung, Bildaufnahmesystem und Maschinenwerkzeugapparat

Appareil de détection de position, appareil de lentille, système de prise d'image, et dispositif de machine-outil

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2013 JP 2013052747**

(43) Date of publication of application:
**17.09.2014 Bulletin 2014/38**

(73) Proprietor: **Canon Kabushiki Kaisha
Tokyo 146-8501 (JP)**

(72) Inventor: **Nakamura, Hitoshi
Tokyo, 146-8501 (JP)**

(74) Representative: **TBK
Bavariaring 4-6
80336 München (DE)**

(56) References cited:
**EP-A1- 2 251 647      EP-A2- 2 343 510
US-A- 4 266 125      US-A1- 2004 206 894
US-A1- 2011 147 572**

## Description

The present invention relates to a position detection apparatus (an encoder) according to the preamble of claim 1, which detects a position.

Description of the Related Art

Conventionally, rotary encoders (position detection apparatuses) have been known which detect a position (a rotational displacement) of an object by reading a predetermined pattern of a scale attached to a rotational shaft of the object and configured to rotate corresponding to a rotation of the object. In the rotary encoder, when a rotation center and a pattern center of the scale are shifted to each other, a periodic error (an eccentric error) having characteristics of a sinusoidal wave with one period per rotation occurs.

JP H06-58771 A discloses a position detection apparatus which includes two sensors arranged at positions different by 180 degrees from each other with respect to a rotational shaft and corrects an eccentric error by averaging signals obtained from the two sensors.

The position detection apparatus disclosed in JP H06-58771 A can correct the eccentric error to improve detection accuracy. However, it requires the two sensors to be arranged at positions shifted by 180 degrees from each other with respect to the rotational shaft. This leads to an increase in the size of holding members of the sensors, which prevents miniaturization of the position detection apparatus.

US 2011/147572 A1 discloses a position detection apparatus which detects a position of an object, the position detection apparatus comprising: a scale which includes a pattern circumferentially and periodically formed on a circle whose center is a predetermined point, the scale being configured to rotate depending on a displacement of the object; a sensor unit relatively movable with respect to the scale; and a signal processor configured to process an output signal of the sensor unit to obtain position information of the object, wherein at least one of the scale and the sensor unit is configured to move integrally with the object.

EP 2 343 510 A2 discloses two sensor units. The senor units include a first sensor that detects a signal from a pattern at a reading area and a second sensor that detects a signal from a pattern at a reading area.

EP 2 251 647 A1 discloses a plurality of sensors disposed along a track.

US 4 266 125 A discloses an encoder which calculates a difference between signals different by 180 degrees from each other obtained from two tracks to suppress an influence of eccentricity.

US 2004/206894 A1 discloses an optical system which compensates a tilt to suppress a detection error caused by the tilt of a rotation shaft of a rotary encoder.

SUMMARY OF THE INVENTION

It is the object of the present invention to further develop a position detection apparatus according to the preamble of claim 1 such that its size and detecting accuracy are improved.

The object of the present invention is achieved with a position detection apparatus having the features of claim 1.

Further advantageous developments of the present invention are laid down in the dependent claims.

Further features and aspects of the present invention will become apparent from the following description of examples with reference to the attached drawings.

BRIEF DESCRIPTION OF THE DRAWINGS

FIG. 1 a schematic configuration diagram of an encoder (a position detection apparatus) in a first example.

FIG. 2 is a diagram illustrating a cross section (the position relationship between a sensor and a scale) of the encoder in the first example.

FIGs. 3A and 3B are configuration diagrams of light receiving portions in the first example and a third example.

FIG. 4 is a block diagram of a signal processor in the first example.

FIG. 5 is a relationship diagram of a rotation angle of the scale and an error in the first example.

FIG. 6 is a diagram illustrating the position relationship between the sensor and the scale in the first example.

FIG. 7 is a relationship diagram of a rotation angle of the scale and an error in the first example.

FIG. 8 is a block diagram of a signal processor in a second example.

FIG. 9 is a schematic configuration diagram of an encoder (a position detection apparatus) in the third example.

FIG. 10 is a block diagram of a signal processor in the third example.

FIGs. 11A to 11D are relationship diagrams of a rotation angle of a scale and an error in the third example.

FIG. 12 is a schematic configuration diagram of an image pickup apparatus (an image pickup system) in a fourth example.

DESCRIPTION OF THE examples

Examples will be described below with reference to the accompanied drawings. In the drawings, the same elements will be denoted by the same reference numerals and the descriptions thereof will be omitted.

(FIRST example)

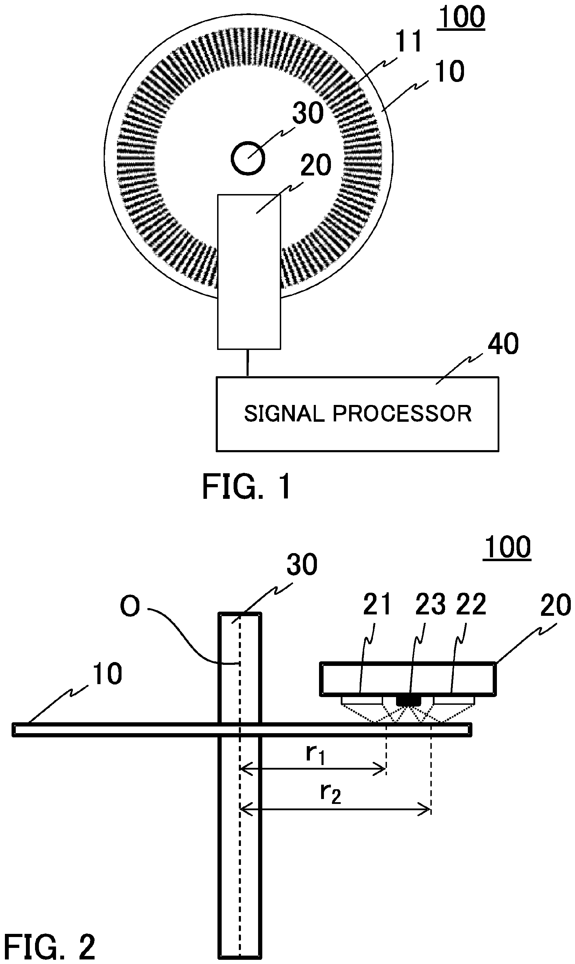

First of all, referring to FIGs. 1 and 2, an encoder (a position detection apparatus) in a first example will be described. FIG. 1 is a schematic configuration diagram of an encoder 100 in the first example. FIG. 2 is a diagram illustrating a cross section (the position relationship between a sensor and a scale) of the encoder 100. The encoder 100 is a position detection apparatus which detects a position (a displacement) of an object, and is especially a reflection-type optical incremental encoder.
As illustrated in FIG. 1, the encoder 100 includes a scale 10, a sensor 20, and a signal processor 40. The scale 10 includes a pattern circumferentially and periodically formed on a circle whose center is a predetermined point (a pattern center, or a rotation center of the scale 10), and the scale 10 rotates depending on a displacement of the object. The scale 10 is attached to a rotational shaft 30 (a rotational shaft of an object to be measured). The sensor 20 (a sensor unit) is attached to a fixed member (not illustrated in the drawing), and is relatively movable with respect to the scale 10. Such a configuration enables the sensor 20 to detect a rotation angle of the rotational shaft 30 (a relative angle between the scale 10 and the sensor 20).
On the scale 10, a track 11 (a pattern) having a reflection portion (a black portion in FIG. 1) and a non-reflection portion (a white portion in FIG. 1) is formed. As illustrated in FIG. 2, the sensor 20 includes two light receiving portions 21 and 22 and a light source 23. FIG. 2 illustrates the position relationship between the scale 10 and the sensor 20 as seen from a direction vertical to the rotational shaft 30. Light emitted from the light source 23 is reflected by the reflection portion of the track 11, and then reaches the light receiving portion 21 (a first detector) and the light receiving portion 22 (a second detector).
A position of light reaching the track 11 of paths from the light source 23 to the light receiving portions 21 and 22 is a read position on the track 11. Hereinafter, a length (distance) from a pattern center O of the track 11 to a read position of the track 11 is referred to as a "detection radius". As illustrated in FIG. 2, detection radii of the paths from the light source 23 to the light receiving portions 21 and 22, i.e. radii (distances) in a radial direction on a half line starting from a predetermined point (a pattern center O) of the scale 10, are denoted by symbols r1 and r2, respectively. As described above, the sensor 20 (the sensor unit) of this example includes the light receiving portion 21 (the first detector) configured to detect the pattern (a first partial pattern) formed in a region (a first region) apart from the pattern center O by a first distance (a radius r1) in the radial direction on the half line starting from the predetermined point of the track 11. The sensor 20 further includes the light receiving portion 22 configured to detect the pattern (a second partial pattern) formed in a region (a second region) apart from the pattern center O by a second distance (a radius r2) different from the first distance (the radius r1).
Each of the light receiving portions 21 and 22 includes a plurality of light receiving elements arrayed in a length measurement direction (a direction orthogonal to a plane of paper of FIG. 2). A displacement of a relative position between the scale 10 and the sensor 20 causes an intensity of light reflected by each light receiving element to be changed depending on an amount of the displacement. The sensor 20 outputs, for each of the light receiving portions 21 and 22, the intensity of each of respective reflected lights as a two-phase false sinusoidal signal.

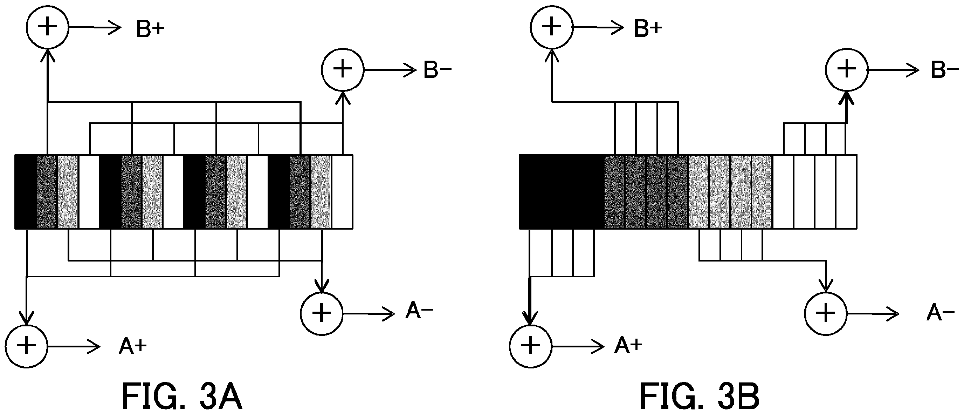

FIG. 3B is a schematic configuration diagram of the light receiving portions 21 and 22. In this example, as illustrated in FIG. 3B, each four adjacent outputs of the light receiving elements is classified into four types as A(+), B(+), A(-), and B(-). Based on expressions of A=A(+)-A(-) and B=B(+)-B(-), two-phase false sinusoidal signals A and B are output. Where a pattern period of the track 11 is $\lambda$ and a width of each light receiving element in an angle detection direction (a length measurement direction) is d, the relation of 2λ≈4d is satisfied because an image of the pattern of the track 11 is magnified two-fold on each light receiving element.

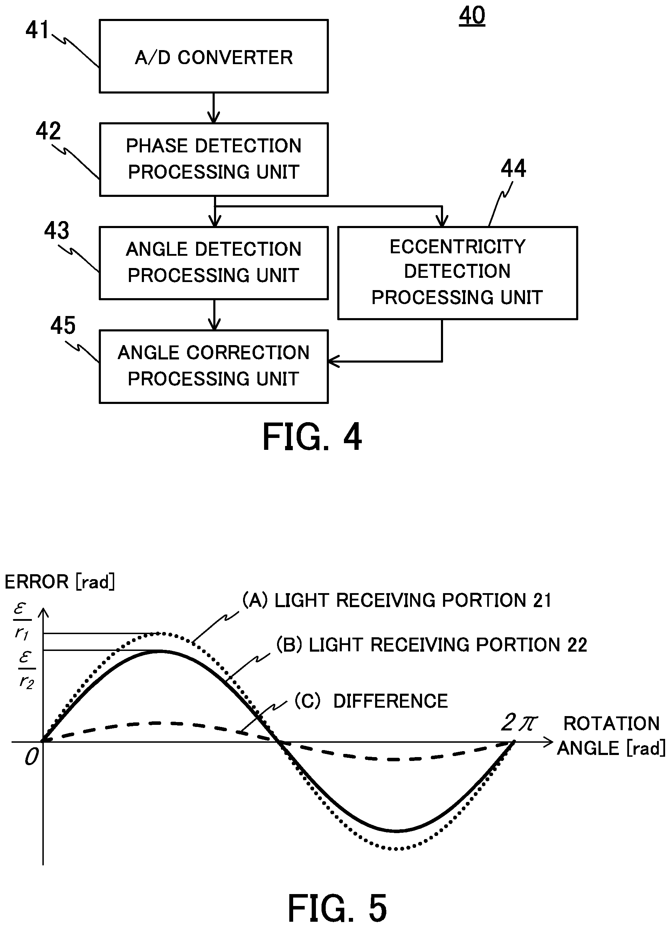

Subsequently, referring to FIG. 4, the signal processor 40 in this example will be described. FIG. 4 is a block diagram of the signal processor 40. The signal processor 40 processes the output signals of the sensor 20 to obtain position information of the object. In addition, as described later, the signal processor 40 is configured to reduce an eccentric error (an error due to eccentricity) of the scale 10 contained in the position information of the object based on a first detection signal outputted from the light receiving portion 21 (the first detector) and a second detection signal outputted from the light receiving portion 22 (the second detector). In this example the "eccentric error" means a difference (a difference in position) between the predetermined point (the pattern center O) and a rotation center of the scale 10, that is, an error which is generated when there is a displacement (an eccentricity) between the predetermined point and the rotation center of the scale 10. Although a description is given in this example using the expression "virtually reduces the eccentric error", the signal processor 40 does not actually reduce the eccentric error, but reduces an error component generated by the eccentric error contained in the position information. As a result, an effect is obtained that the same or similar position information as that obtained when position detection is performed with the eccentric error being reduced (or being eliminated) can be obtained.

As illustrated in FIG. 4, the signal processor 40 includes an A/D converter 41, a phase detection processing unit 42, an angle detection processing unit 43, an eccentricity detection processing unit 44, and an angle correction processing unit 45. In this configuration, the signal processor 40 detects an angle (a displacement) in which the eccentric error has been corrected, based on the output signals of the sensor 20.

Subsequently, an angle detection operation of the signal processor 40 will be described. First, the A/D converter 41 samples two pairs of two-phase sinusoidal signals (analog signals) corresponding to the light receiving portions 21 and 22 to convert them to digital signals. Then, the phase detection processing unit 42 performs an arc-tangent calculation with respect to the sampled two pairs of two-phase sinusoidal signals (the digital signals) to determine a phase. Since a two-phase sinusoidal signal is equivalent to a sine signal "sin" and a cosine signal "cos", a phase can be determined by performing an arc-tangent calculation. A description will be given below, with phases (the first detection signal and the second detection signal) corresponding to the light receiving portions 21 and 22 being denoted as θ1 and θ2, respectively.

The angle detection processing unit 43 (the position detection processing unit) detects an angle based on the phase θ1 determined by the phase detection processing unit 42. The phase θ1 continuously changes from 0 to 2π for each pair of the reflection portion and the non-reflection portion of the track 11, and then transitions from 2n to 0 immediately before the angle detection processing unit 43 starts reading signals from a subsequent pair of the reflection portion and the non-reflection portion. The angle detection processing unit 43 calculates an amount of phase change (an amount of phase shift) by detecting the transition to determine the angle based on the amount of phase change.

For instance, a case will be described in which the track 11 has 90 periods in 360 degrees, that is, the shift of the phase 2π is equivalent to four degrees. In this case, assuming that an initial phase of π/2 becomes 3π/2 after it transitions by two periods in a direction in which an angle increases, a total of phase change of 5π occurs, and thus it can be determined that the phase change is equivalent to an angle of 20 degrees by converting the phase to an angle. More generally, the amount of phase change can be determined by detecting a phase at fixed intervals and then accumulating a difference between a latest phase and a phase detected immediately before detecting the latest phase. A phase change amount s(i) observed at the i-th time detection of the phase θi as a phase change amount up to that time is represented by the following Expression (1), where the relationships of s(0)=0 and θ(0)=0 are satisfied and symbol i denotes a natural number.

$$s(i)=s(i-1)+(\theta(i)-\theta(i-1)) \quad … \quad (1)$$

Then, the angle detection processing unit 43 converts the phase change amount s(i) to an angle (a position) depending on the period of the track 11. Where symbol k denotes the ratio of a period and an angle of the track 11, the angle is represented as k·s(i). As described above, the angle detection processing unit 43 (a position detection processing unit) obtains position information of the object based on the first detection signal outputted from the light receiving portion 21.

The eccentricity detection processing unit 44 (an eccentric error calculating unit) calculates an error e1 contained in the phase θ1 by using detection radii r1 and r2 and the phases θ1 and θ2. Referring now to FIG. 5, a description will be given of an error contained in a detected angle corresponding to the light receiving portions 21 and 22 where ε denotes an eccentric amount. FIG. 5 is a relationship diagram of a rotation angle of the scale 10 and an error. In FIG. 5, a dotted line (A) indicates an error contained in an angle obtained by the light receiving portions 21 and a solid line (B) indicates an error contained in an angle obtained by the light receiving portions 22. A dashed line (C) indicates a difference between the dotted line (A) and the solid line (B).

In this example, radii (detection radii) corresponding to the light receiving portions 21 and 22 are r1 and r2, respectively. Angles of the read positions on the track 11 for the light receiving portions 21 and 22 are equal to each other with reference to the rotational shaft 30. Accordingly, maximum values of detection errors caused by the light receiving portions 21 and 22 are $\varepsilon/r1$ and $\varepsilon/r2$, respectively. The relationship between a rotation angle and a detection error includes an error profile having the same phase within one period for one rotation of the scale 10. Where an error contained in a detected angle is e when a detection radius is r and an eccentricity is $\varepsilon$, the error e is represented by the following Expression (2). In Expression (2), symbol $\alpha$ is a constant.

$$e=(\varepsilon/r)\cdot\sin(\theta+\alpha) \quad … \quad (2)$$

The difference indicated by the dashed line (C) in FIG. 5 can be obtained by determining a difference between the two errors, that is, a difference $\theta1-\theta2$ between the phase $\theta1$ and the phase $\theta2$ corresponding to the light receiving portions 21 and 22, respectively. In this case, the difference $\theta1-\theta2$ is represented by the following Expression (3) by using Expression (2).

$$\theta1-\theta2=(\varepsilon/r1-\varepsilon/r2)\cdot\sin(\theta+\alpha) \quad … \quad (3)$$

The difference indicated by the dashed line (C) also has an error profile in which its phase is the same as that of each of the dotted line (A) and the dotted line (B) and its amplitude is different from that of each of the dotted line (A) and the dotted line (B). The ratio of an amplitude indicated by the dotted line (A) and an amplitude indicated by the dotted line (B) depends only on the detection radii r1 and r2. Therefore, the error e1 (the eccentric error) can be calculated as represented by the following Expression (4) .

$$e1=(\varepsilon/r1)\cdot\sin(\theta+\alpha)=(\theta1-\theta2)\cdot(r2/(r2-r1)) \quad … \quad (4)$$

As described above, the eccentricity detection processing unit 44 (the eccentric error calculating unit) calculates an eccentric error based on the first detection signal outputted from the light receiving portion 21, the second detection signal outputted from the light receiving portion 22, the radius r1 (the first distance), and the radius r2 (the second distance).

The angle correction processing unit 45 (a position correcting unit) subtracts the error e1 determined by the eccentricity detection processing unit 44 from the angle $k\cdot s(i)$ determined by the angle detection processing unit 43 to determine a corrected angle (an angle in which an eccentric error has been reduced). In other words, the angle correction processing unit 45 (the position correcting unit) subtracts the eccentric error calculated by the eccentricity detection processing unit 44 from the position information obtained by the angle detection processing unit 43 to obtain corrected position information. As a result, the signal processor 40 of this example can reduce the error (the eccentric error) to detect the angle with higher accuracy.

While, in this example the angles of the read positions on the track 11 by the light receiving portions 21 and 22 are equal to each other relative to the rotational shaft 30, this example is not limited to this. Even when the read positions on the track 11 by the light receiving portions 21 and 22 are different from each other (even when the angles are different from each other), a relative offset amount between the rotation angle detected by the light receiving portion 21 and the rotation angle detected by the light receiving portion 22 which is caused by a relative displacement amount between the detected angles with respect to the eccentricity can be specified. For this reason, an eccentric error correction can be performed even in this case.

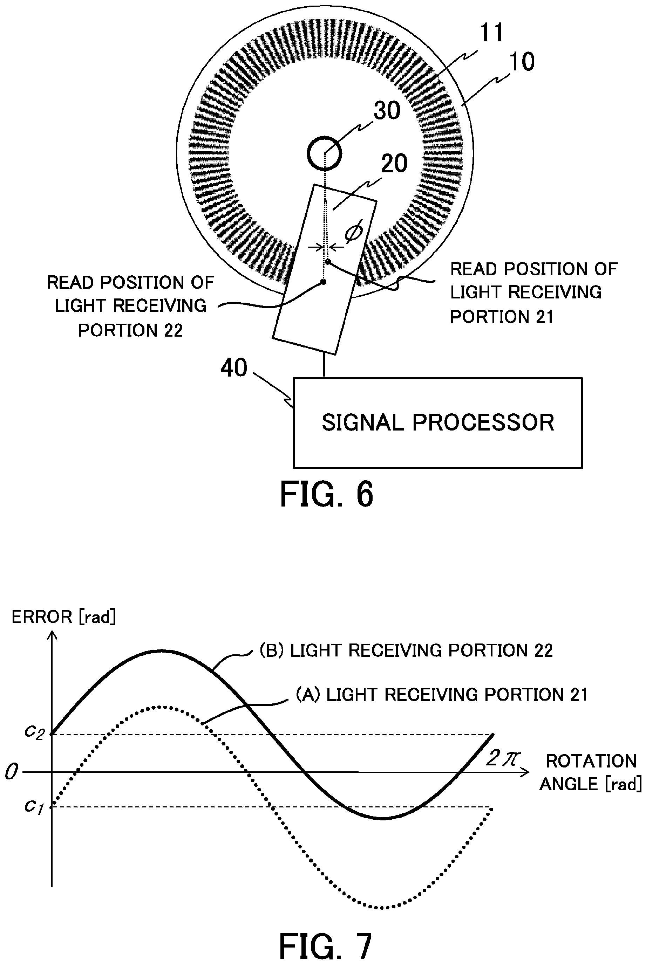

For instance, a case will be described in which, as illustrated in FIG. 6, the scale 10 and the sensor 20 has a rotational inclination between them with respect to an axis passing through the light source 23 in parallel to the rotational shaft 30 (when there is an angle difference $\varphi$ between the scale 10 and the sensor 20). In this case, read positions corresponding to the light receiving portions 21 and 22 are shifted from those appearing when they do not have the rotational inclination.

FIG. 7 is a relationship diagram of a rotation angle of the scale 10 and an error which are observed when there is a rotational inclination as illustrated in FIG. 6. In FIG. 7, a dotted line (A) indicates an error contained in a detected angle obtained by the light receiving portion 21, and a dotted line (B) indicates an error contained in a detected angle obtained by the light receiving portion 22. As illustrated in FIG. 7, error profiles of the phases $\theta1$ and $\theta2$ contain offset amounts c1 and c2 respectively, corresponding to a shift amount of the read positions in a circumferential direction (a length measurement direction). Where $\varphi$ is an angle difference between read positions corresponding to the light receiving portions 21 and 22, the relationship of φ=c1-c2 is satisfied. The error profiles of the phases θ1 and θ2 are represented by the following Expressions (5) and (6), as in the case of Expression (2).

$$(\varepsilon/r1) \cdot \sin(\theta+\alpha1)+c1 \quad \dots \quad (5)$$

$$(\varepsilon/r2) \cdot \sin(\theta+\alpha2)+c2 \quad \dots \quad (6)$$

In Expressions (5) and (6), since a shift amount of the detected positions in the circumferential direction due to the inclination of the sensor 20 is sufficiently small compared to the detection rotation angle, the relationship of α1≈α2 is satisfied. Therefore, a difference θ1-θ2 between the phases θ1 and θ2 is approximated as represented by the following Expression (7). A phase error corresponding to the light receiving portion 21 can be determined by the following Expression (8).

$$\theta1-\theta2 \approx (\varepsilon/r1-\varepsilon/r2) \cdot \sin(\theta+\alpha1)+\varphi \quad \dots \quad (7)$$

$$(\varepsilon/r1) \cdot \sin(\theta+\alpha)=(\theta1-\theta2-\varphi) \cdot (r2/(r2-r1)) \quad \dots \quad (8)$$

If there is an alignment error between the scale 10 and the sensor 20, a term (an angle difference φ) to be an average value of a maximum value and a minimum value of Expression (7) has a value other than zero. In this example, the determination of this amount (the angle difference φ) allows the detection and the correction (the reduction) of a shift amount of read positions, that is, an alignment shift. As described above, the signal processor 40 is further capable of reducing a difference (difference in position) between a region (a first region) of the radius r1 (the first distance) and a region (a second region) of the radius r2 (the second distance) in the length measurement direction that is a direction vertical to the radial direction of the scale 10. This difference is an error caused by a position shift between the regions of the radii r1 and r2 in the circumferential direction. The use of the term (ε/r1-ε/r2) · sin(θ+α1) in Expression (7) derived as a term which satisfies the relationship of α1≈α2 allows the detection of the eccentric amount to correct (reduce) the eccentric error.

(SECOND example)

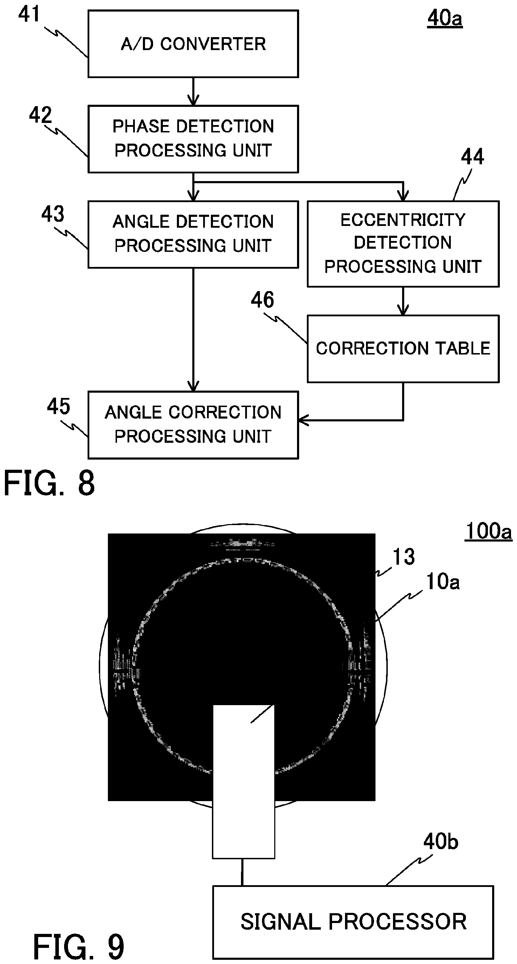

Next, referring to FIG. 8, an encoder (a position detection apparatus) in the second example will be described. FIG. 8 is a schematic configuration diagram of a signal processor 40a of the encoder in this example. The signal processor 40a is different from the signal processor 40 of the first example in that it uses a correction table to correct detected positions, that is, to reduce an eccentric error. Thus, as illustrated in FIG. 8, the signal processor 40a includes a correction table 46 (a corrected value storage unit).

The correction table 46 previously stores a plurality of positions (position information), i.e., a plurality of detected angles, and a corrected value (a value to be used to reduce an eccentric error) corresponding to each position (position information). The angle correction processing unit 45 determines an angle in which an error (an eccentric error) has been corrected, i.e. corrected position information, based on the position information obtained by the angle detection processing unit 43, i.e. the angle (the detected angle) and the corrected value stored in the correction table 46.

Where j is an angle determined by the angle detection processing unit 43, c(j) is a corrected value corresponding to the angle j stored in the correction table 46, and x(j) is a corrected angle determined by the angle correction processing unit 45, the corrected angle x(j) can be determined as represented by the following Expression (9).

$$x(j)=j-c(j) \quad \dots \quad (9)$$

In this example, the corrected value can be stored in the correction table 46 by storing the combination of the angle j detected by the angle detection processing unit 43 and the error e (the corrected value c(j)) determined by the eccentricity detection processing unit 44. Furthermore, instead of storing all combinations of the angle j and its corresponding corrected value in the correction table 46, some values can be thinned (disregarded) without storing them. In this case, the corrected value c(j) corresponding to the angle may not exist. In order to cope with this situation, for instance, using corrected values c(k) and c(l) corresponding angles k and l (k<j<l) stored in the correction table 46, the angle correction processing unit 45 determines the corrected value c(j) corresponding to the angle j by linear interpolation to perform the correction as represented by the following Expression (10).

$$c(j) = (c(k) \cdot (l-j) + c(l) \cdot (j-k))/(l-k) \quad \ldots (10)$$

A fitting to a function may be performed to reduce data volume to be stored in the correction table 46. An error e (an eccentric error) has one period per one rotation of the scale 10, and a detection radius r is constant. This makes it possible to approximately determine the error e as represented by the following Expression (11).

$$e = \varepsilon/r \cdot \sin(j+\alpha) \quad \ldots (11)$$

In this case, the correction table 46 needs only to store values of an eccentricity amount $\varepsilon$ and a constant $\alpha$.

(THIRD example)

Next, referring to FIG. 9, an encoder (a position detection apparatus) in the third example will be described. FIG. 9 is a schematic configuration diagram of an encoder 100a in this example. The encoder 100a is an absolute-type encoder (an absolute-type position detection apparatus) configured to detect a relative displacement (a relative position) between a scale 10a and a sensor 20.

As illustrated in FIG. 9, the scale 10a of this example is provided with a track 12 (a first track) and track 13 (a second track). The tracks 12 and 13 are displaced in conjunction with each other with respect to the sensor 20. The track 12 has a grating pattern (a first pattern) with a pitch P1 (a first period) and a grating pattern (a second pattern) with a pitch P2 (a second period), and the pitches P1 and P2 are different from each other (the grating pattern with the pitch P1 and the grating pattern with the pitch P2 are multiplexed). The track 13 has a grating pattern (a third pattern) with a pitch Q1 (a third period) and a grating pattern (a fourth pattern) with a pitch Q2 (a fourth period), and the pitches Q1 and Q2 are different from each other (the grating pattern with the pitch Q1 and the grating pattern with the pitch Q2 are multiplexed).

The grating patterns of the track 12 have the pitch P1 of 544 periods per rotation and the pitch P2 of 128 periods per rotation. Similarly, the grating patterns of the track 13 have the pitch Q1 of 495 periods per rotation and the pitch Q2 of 132 periods per rotation. In this example, the light receiving portions 21 and 22 detect a relative displacement between the scale 10a and the sensor 20 to classify outputs of the light receiving elements into four types of A(+), B(+), A(-), and B(-). Then, the light receiving portions 21 and 22 output two-phase false sinusoidal signals A and B by using the relationships of A=A (+)-A(-) and B=B(+)-B(-). In this example, the sensor 20 has a function of selecting an array of the light receiving elements. This function enables the sensor 20 to selectively detect the pitches P1 and P2 and the pitches Q1 and Q2.

Subsequently, referring to FIGs. 3A and 3B, a method of reading a grating pattern of each pitch will be described. FIGs. 3A and 3B are configuration diagrams of the light receiving portions 21 and 22. FIG. 3A illustrates a relationship between the light receiving elements and their corresponding outputs observed when the grating pattern with the pitch P1 is read. In order to generate two-phase false sinusoidal signals orthogonal to each other when the grating pattern of the pitch P1 is read, a light receiving amount at a position shifted by P1/2 only has to be output. Therefore, as illustrated in FIG. 3A, each two adjacent outputs of the light receiving elements is arrayed in order of A(+), B(+), A(-), and B(-). Similarly, as illustrated in FIG. 3B, each four adjacent outputs of the light receiving elements is arrayed in order of A(+), B(+), A(-), and B(-) when the grating pattern of the pitch P2 is read. These configurations make it possible to output a two-phase false sinusoidal signal with each pitch.

The sensor 20 outputs intensities of reflected lights at certain positions on the light receiving portions 21 and 22 as signals. Therefore, even when a detection period of the sensor 20 and a period (a pitch) of each pattern formed on the scale 10a are slightly shifted to each other, the sensor 20 outputs a signal with a period corresponding to the pitch of the pattern formed on the scale 10a. Accordingly, where a detection period of the sensor 20 is P1, the light receiving portion 21 outputs a two-phase false sinusoidal signal with the pitch P1 and the light receiving portion 22 outputs a two-phase false sinusoidal signal with the pitch Q1. Similarly, where a detection period of the sensor 20 is 4×P1, the light receiving portion 21 outputs a two-phase false sinusoidal signal with the pitch P2 and the light receiving portion 22 outputs a two-phase false sinusoidal signal with the pitch Q2. As described above, the light receiving portion 21 (the first detector) detects (the pattern of) the track 12 and the light receiving portion 22 (the second detector) detects (the pattern of) the track 13.

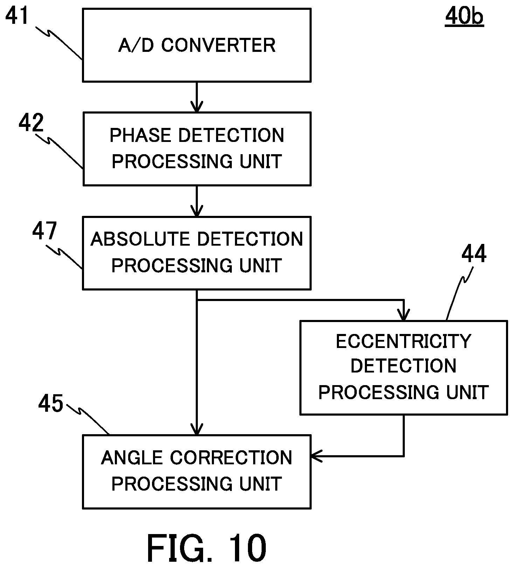

Subsequently, referring to FIG. 10, an operation of a signal processor 40b in this example will be described.

FIG. 10 is a block diagram of the signal processor 40b. Since signals corresponding to four types of pitches of the tracks 12 and 13 are detected in this example, the operation of the signal processor 40b is different from that of the signal processor 40 of the first example and the signal processor 40a of the second example.

First, the sensor 20 is configured to output two pairs of two-phase false sinusoidal signals corresponding to the patterns (the grating patterns) with the pitches P1 and Q1 included in the tracks 12 and 13, with the detection period of the sensor 20 being set to P1. Then, an A/D converter 41 samples the four signals. Subsequently, the A/D converter 41 samples the two pairs of two-phase false sinusoidal signals corresponding to the patterns with the pitches P2 and Q2 which are formed on the tracks 12 and 13, with the detection period of the sensor 20 being set to $4 \times P1$.

The phase detection processing unit 42 determines four phases $\theta P1$, $\theta Q1$, $\theta P2$, and $\theta Q2$ based on the four pairs of two-phase false sinusoidal signals sampled by the A/D converter 41. Similarly to the first and second embodiments, the four phases $\theta P1$, $\theta Q1$, $\theta P2$, and $\theta Q2$ are determined by the arc-tangent calculation. An absolute-type detection processing unit 47 performs a vernier calculation with respect to the four phases $\theta P1$, $\theta Q1$, $\theta P2$, and $\theta Q2$ to determine an angle.

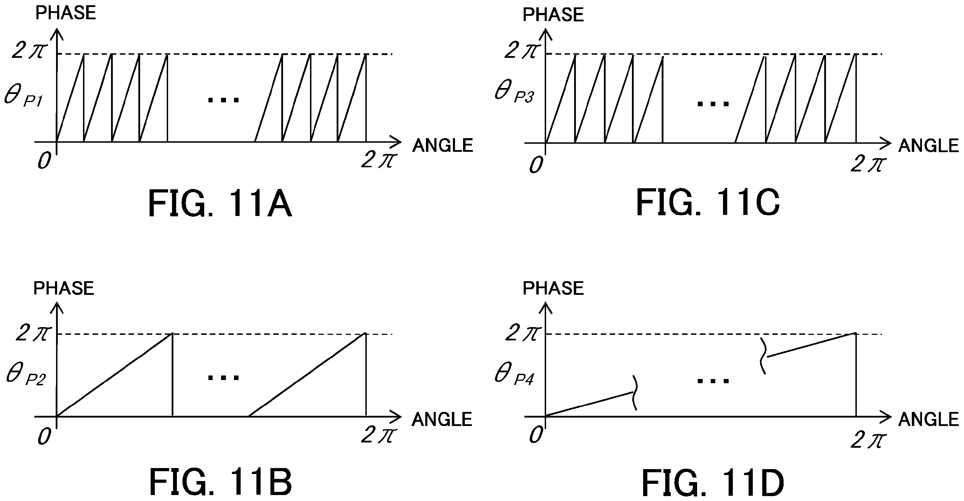

Subsequently, referring to FIGs. 11A to 11D, a relationship between an angle (a rotation angle) of the scale 10a and a phase will be described. FIGs. 11A to 11D are relationship diagrams of a rotation angle of the scale 10a and a phase. In FIGs. 11A to 11D, a horizontal axis indicates an angle and a vertical axis indicates a phase corresponding to the angle.

FIGs. 11A and 11B illustrate the phases $\theta P1$ and $\theta P2$. The phases $\theta P1$ and $\theta P2$ are phases corresponding to the pitches P1 and P2, which are formed on the track 12 with 544 periods per rotation and with 128 periods per rotation, respectively. Accordingly, the phase of the phase $\theta P1$ is approximately four times as long as that of the phase $\theta P2$. Thus, as represented by the following Expression (12), a phase signal $\theta P3$ is determined by multiplying the phase $\theta P2$ by four and then normalizing the value by 2n. Furthermore, as represented by the following Expression (13), a phase difference signal $\theta P4$ which is a phase difference between the phase $\theta P1$ and the phase $\theta P3$ is determined.

$$\theta P3 = MOD(\theta P2 \times 4, 2\pi) \quad \dots \quad (12)$$

$$\theta P4 = MOD(\theta P1 - \theta P3, 2\pi) \quad \dots \quad (13)$$

In Expressions (12) and (13), symbol MOD (x, y) denotes a residue of x divided by y. In this case, the phase signal $\theta P3$ and the phase difference signal $\theta P4$ are determined as illustrated in FIGs. 11C and 11D, respectively. Since the phase signal $\theta P3$ is obtained by quadrupling the phase $\theta P2$ with 128 periods per rotation, it is determined as a signal with 512 periods per rotation. The phase difference signal $\theta P4$ is determined as a signal with 32 periods per rotation that is a periodic difference between the signal with 544 periods per rotation and the signal with 512 periods per rotation.

The phase $\theta P2$ and the phase difference signal $\theta P4$ have 128 periods and 32 periods respectively, and on the other hand, the phase difference signal $\theta P4$ is a value calculated by multiplying the phase $\theta P2$ by four as represented by Expression (12). Therefore, the amount of error is also quadrupled, and thus the error contained in the phase difference signal $\theta P4$ is larger than that contained in the phase $\theta P2$. In order to cope with this, as represented by the following Expression (14), a signal $\theta P5$ with 32 periods which has the same accuracy as that of the phase $\theta P2$ is determined.

$$\theta P5 = ROUND((4 \times \theta P4 - \theta P2) / (2\pi)) \times 2\pi / 4 + \theta P2 / 4 \quad \dots \quad (14)$$

In Expression (14), symbol ROUND(x) denotes rounding off x to the nearest integer.

Similarly, with respect also to the phase $\theta P1$ with 544 periods and the signal $\theta P5$ with 32 periods, as represented by the following Expression (15), a signal $\theta P6$ with 32 periods which has the same accuracy as that of the phase $\theta P1$ is determined.

$$\theta P6 = ROUND((17 \times \theta P5 - \theta P1) / (2\pi)) \times 2\pi / 17 + \theta P1 / 17 \quad \dots \quad (15)$$

The phases $\theta Q1$ and $\theta Q2$ have 495 periods per rotation and 132 periods per rotation, respectively. Therefore, as represented by the following Expression (16), a phase signal $\theta Q3$ is determined by multiplying a phase $\theta Q2$ by four and then normalizing the value by 2n. Then, as represented by the following Expression (17), a phase difference signal $\theta Q4$ of the phase $\theta Q1$ and the phase signal $\theta Q3$ is determined. Furthermore, as represented by the following Expression (18), a signal $\theta Q5$ having the same accuracy as that of the phase $\theta Q2$ is determined. In addition, as represented by the following Expression (19), a signal θQ6 having the same accuracy as that of the phase θQ1 is determined.

$$\theta Q3 = MOD(\theta Q2 \times 4, 2\pi) \quad \text{… (16)}$$

$$\theta Q4 = MOD(\theta Q3 - \theta Q1, 2\pi) \quad \text{… (17)}$$

$$\theta Q5 = ROUND((4 \times \theta Q4 - \theta Q2)/(2\pi)) \times 2\pi/4 + \theta Q2/4 \quad \text{… (18)}$$

$$\theta Q6 = ROUND((15 \times \theta Q5 - \theta Q1)/(2\pi)) \times 2\pi/15 + \theta Q1/15 \quad \text{… (19)}$$

Since the signals θP6 and θQ6 have 32 periods per rotation and 33 periods per rotation respectively, a phase difference θ7 between the signals θP6 and θQ6 is determined as represented by the following Expression (20).

$$\theta 7 = MOD(\theta Q6 - \theta P6, 2\pi) \quad \text{…(20)}$$

The phase difference θ7 represents an angle since it is a signal with a period per rotation that is a periodic difference between the signal with 32 periods per rotation and the signal with 33 periods per rotation. The phase difference θ7, however, has a larger error compared with that of each of the signals θP6 and θQ6. In order to cope with this, signals θP8 and θQ8 which have the same accuracy as those of the signals θP6 and θQ6 are determined as represented by the following Expressions (21) and (22), respectively. Each of the signals θP8 and θQ8 is a signal with one period per rotation, which represents an angle.

$$\theta P8 = ROUND((32 \times \theta 7 - \theta P6)/(2\pi)) \times 2\pi/32 + \theta P6/32 \quad \text{… (21)}$$

$$\theta Q8 = ROUND((33 \times \theta 7 - \theta Q6)/(2\pi)) \times 2\pi/33 + \theta Q6/33 \quad \text{… (22)}$$

The eccentricity detection processing unit 44 determines an eccentric error based on the signals θP8 and θQ8. Since the signals θP8 and θQ8 represent angles, the relationship of θP8=θQ8 is satisfied when they do not have an eccentricity, and on the other hand, an error depending on the eccentricity is contained when they have the eccentricity. A difference θP8-θQ8 between the signal θP8 and the signal θQ8 is represented by the following Expression (23) as in the case of Expression (3).

$$\theta P8 - \theta Q8 = (\varepsilon/r1 - \varepsilon/r2)\sin(\theta + \alpha) \quad \text{… (23)}$$

In Expression (23), it can be assumed that the signal θP8 corresponding to the light receiving portion 21 contains an error represented by the following Expression (24). The eccentricity detection processing unit 44 calculates this error.

$$\varepsilon/r1 \cdot \sin(\theta + \alpha) = (\theta P8 - \theta Q8)(r2/(r2 - r1)) \quad \text{… (24)}$$

The angle correction processing unit 45 determines an angle in which the error (the eccentric error) determined by the eccentricity detection processing unit 44 is subtracted from the signal θP8. This series of operations allows the determination of an error-corrected position (an error-reduced position).

The encoder 100a of this example is an absolute position detection apparatus capable of detecting an absolute position. "Absolute position" used in this example means a relative position of a pattern (or an object to be measured having the pattern thereon) with respect to a detector (the sensor unit) or a relative position of a moving object to be measured with respect to a fixed part. The absolute position detection apparatus is an apparatus capable of detecting a relative position ("absolute position" used in this example) between them in a measurement performed by the detector. On the other hand, the encoders of the first and second examples, which are different from the absolute-type position detection apparatus as described in this example, are incremental type encoders capable of detecting only a position shift (change of a position) in a measurement by the detector. An incremental-type position detection apparatus is capable of determining an absolute position based also on a detection result of an origin detection apparatus (an apparatus capable of uniquely determining a relative position) separately provided.

In this example, as in the case of the first example, when the read positions of the light receiving portions 21 and 22 are shifted on the track 11, an offset amount occurs in Expression (23). In order to cope with this, the encoder 100a may be configured to detect and correct the offset amount. Alternatively, a correction table may be used to correct an error as in the case of the second example.

(FOURTH example)

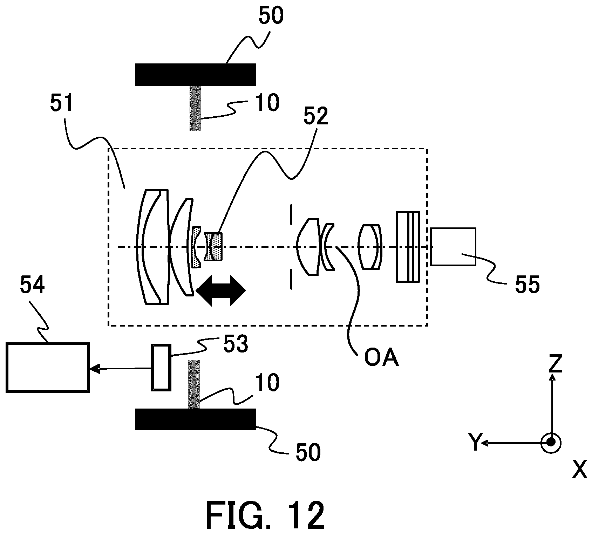

Next, referring to FIG. 12, the fourth example will be described. This example relates to a lens apparatus (a lens barrel) including the encoder (the position detection apparatus) in each of the examples described above. FIG. 12 is a schematic configuration diagram of an image pickup apparatus (an image pickup system) in this example.

In FIG. 12, reference numeral 51 denotes a lens unit, reference numeral 52 denotes a drive lens (a lens), reference numeral 53 denotes a sensor unit, reference numeral 54 denotes a CPU, and reference numeral 55 denotes an image pickup element. The sensor unit 53 corresponds to the sensor 20 of each of the embodiments described above. The CPU 54 corresponds to the signal processor of each of the embodiments (each of the signal processors 40a, 40b, and 40c). The position detection apparatus (the encoder) is configured to detect a position (a displacement) of the drive lens 52. The image pickup element 55 photoelectrically converts an object image (an optical image) formed via the lens unit 51 (the drive lens 52). The lens unit 51, the sensor unit 53, and the CPU 54 are provided in the lens apparatus (the lens barrel), and the image pickup element 55 is provided in a body of the image pickup apparatus. As described above, the lens apparatus of this embodiment is configured to be interchangeable with respect to the body of the image pickup apparatus. This embodiment, however, is not limited to this, and is also applicable to an image pickup apparatus (an image pickup system) which is integrally configured by the lens apparatus and the body of the image pickup apparatus.

The drive lens 52 constituting the lens unit 51 is, for example, a focus lens for auto focus and displaceable in a Y direction that is a direction toward an optical axis OA (an optical axis direction). The drive lens 52 may be other drive lenses such as a zoom lens. A cylindrical body 50 (a movable portion) of the position detection apparatus in each of the embodiments described above is connected to an actuator (not illustrated in the drawing) configured to drive the drive lens 52. A rotation of the cylindrical element 50 around the optical axis OA by the actuator or by hand causes the scale 10 to be relatively displaced with respect to the sensor unit 53. This relative displacement causes the drive lens 52 to be driven in the Y direction (an arrow direction) that is the optical axis direction. A signal (an encoder signal) depending on a position (a displacement) of the drive lens 52 obtained from the sensor unit 53 of the position detection apparatus (the encoder) is output to the CPU 54. The CPU 54 generates a drive signal to move the drive lens 52 to a desired position, and the drive lens 52 is driven based on the drive signal.

The position detection apparatus of each example is also applicable to various kinds of apparatuses other than the lens apparatus or the image pickup apparatus. For instance, a machine tool apparatus can be configured by a machine tool including a movable member such as a robot arm or a conveyer to convey an object to be assembled, and the position detection apparatus of each example which detects a position or an attitude of the machine tool. This enables highly-accurate machining by detecting a position of the robot arm or the conveyer with high accuracy.

(OTHER examples)

Examples can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiments. The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to each of the examples described above, since a plurality of sensors can be adjacently arranged in the radial direction in order to correct an eccentric error, holding members of the sensors can be miniaturized. Moreover, when necessary, a tilt of each sensor (an attachment tilt of each sensor with respect to a direction toward a half line starting from a pattern center) can be detected and corrected. Thus, according to each embodiment, small-sized and highly-accurate position detection apparatus, lens apparatus, image pickup system, and machine tool apparatus can be provided.

While the present invention has been described with reference to examples, the teaching is not limited to the disclosed examples i.e. the scope of the present invention is as defined by the following claims.

A position detection apparatus (100) includes a scale (10) including a pattern circumferentially and periodically formed on a circle whose center is a predetermined point, a sensor unit (20) relatively movable with respect to the scale (10), and a signal processor (40) which processes an output signal of the sensor unit (20) to obtain position information of an object, and the sensor unit (20) includes a first detector (21) and a second detector (22), and the signal processor (40) reduces an error component contained in the position information due to a difference between a rotation center of the scale (10) and the predetermined point based on a first detection signal outputted from the first detector (21) and on a second detection signal outputted from the second detector (22).

**Claims**

1. A position detection apparatus (100) which detects a position of an object, the position detection apparatus (100) comprising:

   a scale (10) which includes a pattern (11) circumferentially and periodically formed on a circle whose center (O) is a predetermined point (O), the scale (10) being configured to rotate depending on a displacement of the object;
   a sensor unit (20) relatively movable with respect to the scale (10); and
   a signal processor (40) configured to process an output signal of the sensor unit (20) to obtain position information of the object,
   wherein one of the scale (10) and the sensor unit (20) is configured to move integrally with the object,
   **characterized in that**
   the sensor unit (20) comprises:

      a first detector (21) configured to detect a first partial pattern of the pattern, formed in a first region apart from the predetermined point (O) by a first distance (r1); and
      a second detector (22) configured to detect a second partial pattern of the pattern, formed in a second region apart from the predetermined point (O) by a second distance (r2) different from the first distance (r1),

   wherein the signal processor (40) is configured to:

      calculate an error component contained in at least one of a first detection signal outputted from the first detector (21) and a second detection signal outputted from the second detector (22) based on the first detection signal and the second detection signal, the error component being a component due to a difference between a rotation center of the scale (10) and the predetermined point (O); and
      output the position information of the object based on the first detection signal, the second detection signal, and the calculated error component.

2. The position detection apparatus (100) according to claim 1, wherein the signal processor (40) comprises:

      a position detection processing unit (43) configured to obtain the position information based on the first detection signal ($\theta$1),
      an eccentric error calculating unit (44) configured to calculate an eccentric error due to the difference between the predetermined point (O) and the rotation center of the scale (10) based on the first detection signal ($\theta$1), the second detection signal ($\theta$2), the first distance (r1), and the second distance (r2), and
      a position correcting unit (45) configured to subtract the eccentric error calculated by the eccentric error calculating unit (44) from the position information obtained by the position detection processing unit (43) to obtain corrected position information.

3. The position detection apparatus (100) according to claim 2, wherein the eccentric error calculating unit (44) is configured to calculate the eccentric error by using the following expression:

$$e1=(\theta1-\theta2)\cdot(r2/(r2-r1)),$$

where e1 is the eccentric error, $\theta1$ is the first detection signal, $\theta2$ is the second detection signal, r1 is the first distance, and r2 is the second distance.

4. The position detection apparatus (100) according to claim 1, wherein the signal processor (40) comprises:

a position detection processing unit (43) configured to obtain the position information based on the first detection signal ($\theta1$),
a corrected value storage unit (46) configured to store the position information and a corrected value corresponding to the position information, and
a position correcting unit (45) configured to obtain corrected position information based on the position information obtained by the position detection processing unit (43) and on the corrected value stored in the corrected value storage unit (46).

5. The position detection apparatus (100) according to any one of claims 1 to 4, wherein the position detection apparatus (100) is an absolute-type position detection apparatus.

6. A lens apparatus (51) comprising:

a lens (52) displaceable in an optical axis direction; and
a position detection apparatus (100) according to any one of claims 1 to 5, the position detection apparatus (100) being configured to detect a position of the lens (52).

7. An image pickup system comprising:

a lens apparatus (51) according to claim 6; and
an image pickup apparatus including an image pickup element (55) configured to perform a photoelectric conversion of an optical image formed via the lens (52).

8. A machine tool apparatus comprising:

a machine tool including a robot arm or a conveyer for conveying an object to be assembled; and
a position detection apparatus (100) according to any one of claims 1 to 5, the position detection apparatus (100) being configured to detect at least one of a position and an attitude of the machine tool.

9. The position detection apparatus (100) according to claim 1, wherein the first partial pattern has a first period and the second partial pattern has a second period, and wherein the first period is different from the second period.

**Patentansprüche**

1. Positionserfassungsgerät (100), das eine Position eines Gegenstands erfasst, wobei das Positionserfassungsgerät (100) Folgendes aufweist:

eine Skala (10), die ein Muster (11) aufweist, das am Umfang und periodisch auf einem Kreis ausgebildet ist, dessen Mitte (O) ein vorbestimmter Punkt (O) ist, wobei die Skala (10) gestaltet ist, um sich abhängig von einer Verschiebung des Gegenstands zu drehen;
eine Sensoreinheit (20), die relativ in Bezug auf die Skala (10) beweglich ist; und
einen Signalprozessor (40), der gestaltet ist, um ein Ausgabesignal der Sensoreinheit (20) zu verarbeiten, um Positionsinformationen des Gegenstands zu erhalten,
wobei zumindest eine von der Skala (10) und der Sensoreinheit (20) gestaltet ist, um sich einstückig mit dem Gegenstand zu bewegen,
**dadurch gekennzeichnet, dass**
die Sensoreinheit (20) Folgendes aufweist:

einen ersten Detektor (21), der gestaltet ist, um ein erstes Teilmuster des Musters zu erfassen, das in einer ersten Region ausgebildet ist, die von dem vorbestimmten Punkt (O) um einen ersten Abstand (r1) entfernt ist; und

einen zweiten Detektor (22), der gestaltet ist, um ein zweites Teilmuster des Musters zu erfassen, das in einer zweiten Region ausgebildet ist, die von dem vorbestimmten Punkt (O) in einem zweiten Abstand (r2) entfernt ist, der von dem ersten Abstand (r1) verschieden ist,

wobei der Signalprozessor (40) gestaltet ist:

um eine Fehlerkomponente, die in zumindest einem von einem ersten Erfassungssignal, das von dem ersten Detektor (21) ausgegeben wird, und einem zweiten Erfassungssignal, das von dem zweiten Detektor (22) ausgegeben wird, beinhaltet ist, auf der Grundlage des ersten Erfassungssignals und des zweiten Erfassungssignals zu berechnen, wobei die Fehlerkomponente eine Komponente aufgrund einer Differenz zwischen einer Drehmitte der Skala (10) und dem vorbestimmten Punkt (O) ist; und
um die Positionsinformationen des Gegenstands auf der Grundlage des ersten Erfassungssignals, des zweiten Erfassungssignals und der berechneten Fehlerkomponente auszugeben.

2. Positionserfassungsgerät (100) nach Anspruch 1, wobei der Signalprozessor (40) Folgendes aufweist:

eine Positionserfassungsverarbeitungseinheit (43), die gestaltet ist, um die Positionsinformationen auf der Grundlage des ersten Erfassungssignals ($\theta$1) zu erhalten,
eine Exzentrizitätsfehlerberechnungseinheit (44), die gestaltet ist, um einen Exzentrizitätsfehler aufgrund der Differenz zwischen dem vorbestimmten Punkt (O) und der Drehmitte der Skala (10) auf der Grundlage des ersten Erfassungssignals ($\theta$1), des zweiten Erfassungssignals ($\theta$2), des ersten Abstands (r1) und des zweiten Abstands (r2) zu berechnen, und
eine Positionskorrektureinheit (45), die gestaltet ist, um den Exzentrizitätsfehler, der durch die Exzentrizitätsfehlerberechnungseinheit (44) berechnet wird, von den Positionsinformationen, die durch die Positionserfassungsverarbeitungseinheit (43) erhalten werden, zu subtrahieren, um korrigierte Positionsinformationen zu erhalten.

3. Positionserfassungsgerät (100) nach Anspruch 2, wobei

die Exzentrizitätsfehlerberechnungseinheit (44) gestaltet ist, um den Exzentrizitätsfehler mittels der nachstehenden Gleichung zu berechnen:

$$e1 = (\theta1 - \theta2) \cdot (r2/(r2-r1)),$$

wobei e1 der Exzentrizitätsfehler ist, $\theta$1 das erste Erfassungssignal ist, $\theta$2 das zweite Erfassungssignal ist, r1 der erste Abstand ist, und r2 der zweite Abstand ist.

4. Positionserfassungsgerät (100) nach Anspruch 1, wobei der Signalprozessor (40) Folgendes aufweist:

eine Positionserfassungsverarbeitungseinheit (43), die gestaltet ist, um die Positionsinformationen auf der Grundlage des ersten Erfassungssignals ($\theta$1) zu erhalten,
eine Korrekturwertspeichereinheit (46), die gestaltet ist, um die Positionsinformationen und einen korrigierten Wert korrespondierend zu den Positionsinformationen zu speichern, und
eine Positionskorrektureinheit (45), die gestaltet ist, um korrigierte Positionsinformationen auf der Grundlage der Positionsinformationen, die durch die Positionserfassungsverarbeitungseinheit (43) erhalten werden, und des korrigierten Werts, der in der Korrekturwertspeichereinheit (46) gespeichert ist, zu erhalten.

5. Positionserfassungsgerät (100) nach einem der Ansprüche 1 bis 4, wobei das Positionserfassungsgerät (100) ein Absolutpositionserfassungsgerät ist.

6. Objektivgerät (51), das Folgendes aufweist:

ein Objektiv (52), das in einer optischen Achsenrichtung verschiebbar ist; und

ein Positionserfassungsgerät (100) nach einem der Ansprüche 1 bis 5, wobei das Positionserfassungsgerät (100) gestaltet ist, um eine Position des Objektivs (52) zu erfassen.

7.  Bildaufnahmesystem, das Folgendes aufweist:

ein Objektivgerät (51) nach Anspruch 6; und
ein Bildaufnahmegerät mit einem Bildaufnahmeelement (55), das gestaltet ist, um eine photoelektrische Umwandlung eines optischen Bilds, das über das Objektiv (52) erzeugt wird, auszuführen.

8.  Werkzeugmaschinengerät, das Folgendes aufweist:

eine Werkzeugmaschine, die einen Roboterarm oder eine Fördereinrichtung zum Fördern eines zu montierenden Gegenstands aufweist; und
ein Positionserfassungsgerät (100) nach einem der Ansprüche 1 bis 5, wobei das Positionserfassungsgerät (100) gestaltet ist, um zumindest eine von einer Position und einer Stellung der Werkzeugmaschine zu erfassen.

9.  Positionserfassungsgerät (100) nach Anspruch 1, wobei das erste Teilmuster eine erste Phase hat und das zweite Teilmuster eine zweite Phase hat, und wobei die erste Phase von der zweiten Phase verschieden ist.

## Revendications

1.  Appareil de détection de position (100) qui détecte une position d'un objet, l'appareil de détection de position (100) comprenant :

une échelle (10) qui comprend un modèle (11) formé de manière circonférentielle et périodique sur un cercle dont le centre (O) est un point prédéterminé (O), l'échelle (10) étant configurée pour tourner en fonction d'un déplacement de l'objet ;
une unité de capteur (20) relativement mobile par rapport à l'échelle (10) ; et
un processeur de signal (40) configuré pour traiter un signal de sortie de l'unité de capteur (20) afin d'obtenir des informations de position de l'objet,
dans lequel l'une parmi l'échelle (10) et l'unité de capteur (20) est configurée pour se déplacer de manière solidaire avec l'objet,
**caractérisé en ce que** :
l'unité de capteur (20) comprend :

un premier détecteur (21) configuré pour détecter un premier modèle partiel du modèle formé dans une première région éloignée du point (O) prédéterminé, par une première distance (r1) ; et
un second détecteur (22) configuré pour détecter un second modèle partiel du modèle formé dans une seconde région éloignée du point (O) prédéterminé, par une seconde distance (r2) différente de la première distance (r1),

dans lequel le processeur de signal (40) est configuré :

pour calculer une composante d'erreur contenue dans au moins l'un parmi un premier signal de détection produit par le premier détecteur (21) et un second signal de détection produit par le second détecteur (22) en fonction du premier signal de détection et du second signal de détection, la composante d'erreur étant une composante due à une différence entre un centre de rotation de l'échelle (10) et le point (O) prédéterminé ; et
pour produire les informations de position de l'objet en fonction du premier signal de détection, du second signal de détection et de la composante d'erreur calculée.

2.  Appareil de détection de position (100) selon la revendication 1, dans lequel le processeur de signal (40) comprend :

une unité de traitement de détection de position (43) configurée pour obtenir les informations de position basées sur le premier signal de détection ($\theta$1),
une unité de calcul d'erreur excentrique (44) configurée pour calculer une erreur excentrique due à la différence entre le point (O) prédéterminé et le centre de rotation de l'échelle (10) en fonction du premier signal de détection (θ1), du second signal de détection (θ2), de la première distance (r1) et de la seconde distance (r2), et
une unité de correction de position (45) configurée pour soustraire l'erreur excentrique calculée par l'unité de calcul d'erreur excentrique (44) des informations de position obtenues par l'unité de traitement de détection de position (43) afin d'obtenir des informations de position corrigées.

3.  Appareil de détection de position (100) selon la revendication 2, dans lequel l'unité de calcul d'erreur excentrique (44) est configurée pour calculer l'erreur excentrique en utilisant l'expression suivante :

$$e1 = (\theta1 - \theta2). (r2/(r2 - r1)),$$

dans laquelle e1 est l'erreur excentrique, θ1 est le premier signal de détection, θ2 est le second signal de détection, r1 est la première distance, et r2 est la seconde distance.

4.  Appareil de détection de position (100) selon la revendication 1, dans lequel le processeur de signal (40) comprend :

une unité de traitement de détection de position (43) configurée pour obtenir les informations de position basées sur le premier signal de détection (θ1),
une unité de stockage de valeur corrigée (46) configurée pour stocker les informations de position et une valeur corrigée correspondant aux informations de position, et
une unité de correction de position (45) configurée pour obtenir des informations de position corrigées en fonction des informations de position obtenues par l'unité de traitement de détection de position (43) et de la valeur corrigée stockée dans l'unité de stockage de valeur corrigée (46).

5.  Appareil de détection de position (100) selon l'une quelconque des revendications 1 à 4, dans lequel l'appareil de détection de position (100) est un appareil de détection de position de type absolu.

6.  Appareil de lentille (51) comprenant :

une lentille (52) pouvant être déplacée dans une direction d'axe optique ; et
un appareil de détection de position (100) selon l'une quelconque des revendications 1 à 5, l'appareil de détection de position (100) étant configuré pour détecter une position de la lentille (52).

7.  Système de prise d'image comprenant :

un appareil de lentille (51) selon la revendication 6 ; et
un appareil de prise d'image comprenant un élément de prise d'image (55) configuré pour réaliser une conversion photoélectrique d'une image optique formée via la lentille (52).

8.  Appareil de machine-outil comprenant :

une machine-outil comprenant un bras robotisé ou un transporteur pour transporter un objet à assembler ; et
un appareil de détection de position (100) selon l'une quelconque des revendications 1 à 5, l'appareil de détection de position (100) étant configuré pour détecter au moins l'une parmi une position et une attitude de la machine-outil.

9.  Appareil de détection de position (100) selon la revendication 1, dans lequel le premier modèle partiel a une première période et le second modèle partiel a une seconde période et dans lequel la première période est différente de la seconde période.

FIG. 1

FIG. 2

FIG. 3B

FIG. 3A

41　A/D CONVERTER

42　PHASE DETECTION PROCESSING UNIT

44　ECCENTRICITY DETECTION PROCESSING UNIT

43　ANGLE DETECTION PROCESSING UNIT

45　ANGLE CORRECTION PROCESSING UNIT

40

FIG. 4

ERROR [rad]

$\frac{\varepsilon}{r_1}$

$\frac{\varepsilon}{r_2}$

(A) LIGHT RECEIVING PORTION 21

(B) LIGHT RECEIVING PORTION 22

(C) DIFFERENCE

$O$

$2\pi$　ROTATION ANGLE [rad]

FIG. 5

**FIG. 6**

**FIG. 7**

**41** A/D CONVERTER

**40a**

**42** PHASE DETECTION PROCESSING UNIT

**43** ANGLE DETECTION PROCESSING UNIT

**44** ECCENTRICITY DETECTION PROCESSING UNIT

**46** CORRECTION TABLE

**45** ANGLE CORRECTION PROCESSING UNIT

# FIG. 8

**100a**

**13**

**10a**

**40b**

SIGNAL PROCESSOR

# FIG. 9

41

A/D CONVERTER

40b

42

PHASE DETECTION
PROCESSING UNIT

47

ABSOLUTE DETECTION
PROCESSING UNIT

44

ECCENTRICITY
DETECTION
PROCESSING UNIT

45

ANGLE CORRECTION
PROCESSING UNIT

FIG. 10

FIG. 11A

FIG. 11B

FIG. 11C

FIG. 11D

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0658771 A
- US 2011147572 A1
- EP 2343510 A2
- EP 2251647 A1
- US 4266125 A
- US 2004206894 A1